# Europäisches Patentamt
## European Patent Office
## Office européen des brevets

(19)

(11) Veröffentlichungsnummer : **0 034 309**
**B1**

(12) # EUROPÄISCHE PATENTSCHRIFT

(45) Veröffentlichungstag der Patentschrift :
**11.04.84**

(51) Int. Cl.³ : **C 08 L 63/02, B 41 J 3/04**

(21) Anmeldenummer : **81100832.5**

(22) Anmeldetag : **05.02.81**

---

(54) **Verwendung von Giessharzmassen aus Epoxidharzen zur Herstellung von Tintenmosaikschreibköpfen.**

(30) Priorität : **18.02.80 DE 3006053**

(43) Veröffentlichungstag der Anmeldung :
**26.08.81 Patentblatt 81/34**

(45) Bekanntmachung des Hinweises auf die Patenterteilung : **11.04.84 Patentblatt 84/15**

(84) Benannte Vertragsstaaten :
**AT BE CH DE FR GB IT LI NL SE**

(56) Entgegenhaltungen :
**DE-B- 1 236 195**
**FR-A- 1 514 842**
**FR-A- 2 418 088**

(73) Patentinhaber : **SIEMENS AKTIENGESELLSCHAFT**
**Berlin und München Wittelsbacherplatz 2**
**D-8000 München 2 (DE)**

(72) Erfinder : **Habrich, Reiner**
**Reiherweg 14**
**D-8016 Heimstetten b. München (DE)**

Jouve, 18, rue St-Denis, 75001 Paris, France

## Verwendung von Gießharzmassen aus Epoxidharzen zur Herstellung von Tintenmosaikschreibköpfen

Die Erfindung betrifft Gießharzmassen für die Herstellung von Tintenmosaikschreibköpfen.

Ein Tintenkopfmosaikschreibkopf dient in einer Schreibstation zum lautlosen « Drucken » von Informationen, z. B. Schrift, Zeichnungen usw. Der Schreibkopf besteht aus Kunststoff und enthält mehrere, meistens zwölf geradlinige Kanäle, die beidseitig offen sind. Feinste Tintentröpfchen werden aus den Kanälen des Schreibkopfes ausgestoßen und erzeugen das « Bild » auf dem Papier. Als Tinte werden vielfach Gemische aus organischen Lösungsmitteln, wie z. B. Methylpyrrolidon, Methanol sowie Wasser und Farbstoff verwendet. Viele Kunststoffe werden hiervon angegriffen.

Bei einem bekannten Schreibkopf (Siemenszeitschrift 51/1977, S. 219-221) ende die zwölf Kanäle auf der Schreibseite innerhalb einer Fläche von ca. 2 × 3 mm. Jeder Kanal ist an seinem anderen Ende von einem Piezokeramikröhrchen umschlossen, dessen elektrische Anschlußdrähte mit einem angebauten Stecker verbunden sind. Durch Spannungsimpulse werden die Piezokeramikröhrchen kontrahiert und spritzen die in den Röhrchen stehende Tinte aus.

Es sind aus der französischen Patentschrift 1 514 842 klare und farblose Produkte bekannt, die durch Formgebung und Härtung einer mehr als eine Epoxigruppe pro Molekül enthaltenden Verbindung und einem Diamin erhalten werden.

Aus der DE-AS 1 236 195 sind Umsetzungsprodukte von Epoxiverbindungen mit mehr als einer 1,2-Epoxi-Gruppe pro Molekül mit 3,5,5,-Trimethyl-3-aminomethyl-cyclohexylamin bekannt. Die hieraus hergestellten Formkörper sollen sehr gute Chemikalienbeständigkeit aufweisen.

Versuche, Schreibköpfe aus mit aliphatischen Aminen härtbaren Epoxidharzen zu gießen, führten zu unbefriedigenden Ergebnissen. Nach kurzer Einwirkungszeit der Tinte wird der Gießharzformstoff der Köpfe angequollen bzw. angelöst. Dadurch werden die Kanäle in ihren Querschnitten verändert und die Tinte verunreinigt. Längere Einwirkungsdauer der Tinte führte zum Ausfall der Köpfe.

Die Aufgabe der Erfindung besteht darin, mit-tels Gießharzmasse transparente Tintenmosaik-schreibköpfe ausreichender mechanischer und thermischer Festigkeit herzustellen, die nach der Härtung der Masse von der Tintenflüssigkeit weder angelöst noch angequollen werden.

Diese Aufgabe wird dadurch gelöst, daß erfindungsgemäß Gießharzmassen verwendet werden, die mit einem cycloaliphatischen Diamin als Härterkomponente oder katalytisch mit einem tertiären Amin härtbare Epoxidharze auf Basis von Bisphenol A mit einem Epoxidwert von 0,50 bis 0,58 enthalten. Das Gewichtsverhältnis von Epoxidharz zum Diamin beträgt vorzugsweise 100 : 25. Für die katalytische Härtung mit einem tertiären Amin werden auf 100 Gewichtsteile des Epoxidharzes 0,5 bis 5 Gewichtsteile des tertiären Amins verwendet.

Durch einen Zusatz von 0,1 bis 2 Gewichtsprozent eines Silans, z. B. γ-Glycidyloxypropyltrimethoxysilan kann die Verarbeitbarkeit der Masse und die Haftung des Formstoffes auf den verschiedenen Substraten verbessert werden.

Für die Herstellung von Tintenschreibköpfen aus den erfindungsgemäßen Gießharzmassen können erfindungsgemäß 100 Gewichtsteile des Epoxidharzes auf Basis von Bisphenol A und 0,5 bis 5 Gewichtsteile eines tertiären Amins und 0,1 Gewichtsteilen eines Epoxisilans vermischt, bei 40 °C im Vakuum vergossen, bei 100 °C gehärtet, entformt und gegebenenfalls nachgetempert werden. Gemäß einer besonders vorteilhaften Ausführungsform der Erfindung werden 100 Gewichtsteile des Epoxidharzes auf Basis von Bisphenol A mit einem Epoxidwert von 0,57 ± 0,02 mit 25 Gewichtsteilen Isophorondiamin und gegebenenfalls 1 Gewichtsteil eines Epoxisilans vermischt, im Vakuum bei 40 °C vergossen, bei 100 °C gehärtet, entformt und gegebenenfalls nachgetempert.

Mit den erfindungsgemäßen Gießharzmassen erfolgt die Aushärtung nahezu ohne Volumenschwund zu einem nicht spröden, sondern zähen Formstoff. Die Verarbeitung ist besonders wegen der niedrigen Viskosität der Masse günstig. Ein hieraus hergestellter Schreibkopf für einen Tintenmosaikschreiber wird nicht von Tinte auf der Grundlage von Wasser und organischen Lö-sungsmitteln, insbesondere α-Methylpyrrolidon und Methanol sowie Glykolen angegriffen. Die Transparenz des Harzes gewährleistet ein Kontrolle auf Blasenfreiheit und Tintenfluß bzw. Füllstand mit Tinte im Kanal. Der Druck mit Schreibköpfen, hergestellt aus den erfindungsgemäßen Gießharzmassen erfolgt praktisch lautlos.

Isophorondiamin (1-Amino-3-methyl-aminomethyl-5-dimethyl-cyclohexan) hat sich als Härter besonders bewährt. Besonders vorteilhaft ist seine niedrige Viskosität von ca. 20 mPa.s bei 20 °C und dies bewirkt eine erhebliche Erniedrigung der Viskosität des Epoxidharzes und damit der Masse (< 500 mPa.s bei 40 °C). Bei 40 °C hat die Masse noch die relativ lange Gebrauchsdauer von 20 min., so daß beim Gießen unter Vakuum blasen- und störstellenfreie Formteile erhalten werden können. Durch Anheben der Temperatur der Harzmasse in der Gießform auf 110 °C kann bereits nach ca. 1 Stunde entformt werden.

Geeignete tertiäre Amine für die katalytische Härtung sind z. B. 2,4,6-Tris-dimethylaminomethylphenol (DMP-30), N,N',-Dimethylamino-diphenylmethan (T-Base) oder N-Dimethylbenzylamin.

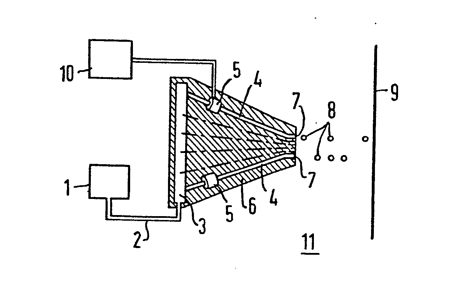

In der Zeichnung ist eine Ausführungsform der Erfindung veranschaulicht. Sie betrifft in schematischer Darstellung das Modell « Tintentropfen-Drucker Siemens PT 80 » mit dem Tintenbehälter 1 und der Tintenzuleitung 2. Der Tintenverteiler 3, die zwölf Düsenkanäle 4 mit den sie umschließenden rohrförmigen Piezokristall en 5 u. der Düse 7 sind in die Geißharzmasse 6 eingebettet. Der aus diesen Teilen bestehende Tintenschreibkopf 11 wird am Papier 9 vorbeibewegt. Die Schreibinformation gelangt über eine elektronische Steuerung 10 zum Piezokristall 5. Mit 8 sind die Tintentröpfchen bezeichnet.

Die erfindungsgemäßen Gießharzmassen eignen sich vortrefflich für die Herstellung von Tintenmosaikschreibköpfen. Der Anschlag ist praktisch lautlos selbst bei ca. 300 Zeichen/sec.

Die folgenden Beispiele erläutern die Erfindung näher. Die Teile sind Gewichtsteile. Die verwendete Epoxidverbindung ist ein flüssiger Diglycidyläther des Bisphenol A [2,2-Bis-(4-hydroxyphenyl)propan] mit den folgenden Eigenschaften :

Epoxidwert 0,50 bis 0,585
Viskosität 4 000-13 000 mPa.s bei 25 °C.

Beispiel 1

Zu einer Mischung aus 99 Gewichtsteilen Bisphenol A mit einem Epoxidwert von 0,56 bis 0,585 und einem Gewichtsteil Epoxisilan werden 25 Gewichtsteile Isophorondiamin bei 30 °C gegeben und die Masse gemischt und entgast. Die blasenfreie Masse wird unter Vakuum bei einem Druck von 0,5 bis 10 mbar in eine erwärmte Gießform gefüllt, in welcher sich die einzubettenden Teile befinden. Die Form wird 1 Stunde auf 100 °C gehalten, wobei die Masse härtet. Nach dem Entformen wird der Formkörper weitere 2 Stunden bei 100 °C getempert.

Das resultierende Formstück ist mechanisch zäh und transparent und zeichnet sich durch hohe Maßhaltigkeit aus. Dies in Verbindung mit der hohen Resistenz gegenüber Wasser und organischen Lösungsmitteln ist von besonderer Wichtigkeit für Tintenmosaikschreibköpfe. Bei der Herstellung solcher Schreibköpfe verändern sich die nach dem Entfernen der in der Form angeordneten Nadeln entstehenden feinsten Kanäle auch im jahrelangen Einsatz ihren Durchmesser praktisch nicht. Der Durchfluß der Schreibflüssigkeit bleibt beobachtbar und über Jahre konstant. Ebenso wird auch die Tinte durch den Gießharzformstoff nicht verändert.

Beispiel 2

Eine Mischung aus 99 Gewichtsteil Epoxidharz mit einem Epoxidwert von 0,56 bis 0,585 und einem Gewichtsteil Epoxisilan wird bei 60 °C mit 2,4,6-Tris-dimethylaminomethylphenol (DMP-30) versetzt, gemischt und entgast. Die blasenfreie Masse wird unter Vakuum bei einem Druck von 0,5 bis 10 mbar in eine Gießform von ca. 70 °C gefüllt. Nach einstündigem Härten bei 100 °C wird entformt und der Formling 4 Stunden bei ca. 120 °C getempert. Ein so hergestellter Tintenmosaikschreibkopf zeichnet sich durch besonders gute mechanische Festigkeit und Tintenbeständigkeit aus. Die engen Kanäle weisen selbst nach jahrelangem Einfluß von Tinte noch keine Veränderung auf. Durch den Gießharzformstoff wird die Tinte nicht verändert.

**Ansprüche**

1. Verwendung von Gießharzmassen aus mit einem cycloaliphatischen Diamin oder einem tertiären Amin härtbaren Epoxidharzen auf Basis von Bisphenol A mit einem Epoxidwert von 0,50 bis 0,58 für die Herstellung von Tintenmosaikschreibköpfen.

2. Verwendung nach Anspruch 1, dadurch ge-kennzeichnet, daß Epoxidharz und cycloaliphati-sches Diamin in Gewichtsverhältnis 100 : 25 enthalten sind.

3. Verwendung nach Anspruch 1, dadurch gekennzeichnet, daß Epoxidharz und tertiäres Amin im Gewichtsverhältnis 100 : 3 enthalten sind.

4. Verwendung nach Anspruch 1 und 2, da-durch gekennzeichnet, daß als cycloaliphati-sches Diamin Isophorondiamin enthalten ist.

5. Verwendung nach Anspruch 1 und 3, dadurch gekennzeichnet, daß als tertiäres Amin 2,4,6-Tris-dimethylaminomethylphenol (DMP-30) enthalten ist.

6. Verwendung nach Anspruch 1 und 3, dadurch gekennzeichnet, daß als tertiäres Amin N, N'-Dimethylaminophenylmethan (T-Base) enthalten ist.

7. Verwendung nach den Anspruch 1 bis 6, dadurch gekennzeichnet, daß die Gießharzmassen außerdem 0,1 bis 2 Gewichtsteile eines Epoxisilans enthalten.

8. Verfahren zur Herstellung von Tintenmo-saikschreibköpfen unter Verwendung von härtba-ren Gießharzmassen nach den Ansprüchen 1, 2, 4 und 7, dadurch gekennzeichnet, daß ein Gemisch aus 100 Gewichtsteilen eines Epoxidharzes auf Basis von Bisphenol A mit einem Epoxidwert von 0,50 bis 0,58 und 25 Gewichtsteile Isophorondiamin und gegebenenfalls 0,1 bis 2 Gewichtsteile eines Epoxisilans im Vakuum vergossen, entformt und gegebenenfalls nachgetempert werden.

9. Verfahren zur Herstellung von Tintenmo-saikschreibköpfen unter Verwendung von Gieß-harzmassen nach den Ansprüchen 1, 3, 5, 6 und 7, dadurch gekennzeichnet, daß 100 Gewichtsteile eines Epoxidharzes auf Basis von Bisphenol A mit einem Epoxidwert von 0,50 bis 0,58 und 1 bis 3 Gewichtsteile eines tertiären Amins und gegebenenfalls 1 Gewichtsteil eines Epoxisilans im Vakuum vergossen, entformt und nachgetempert werden.

10. Verfahren nach Anspruch 8 und 9, dadurch gekennzeichnet, daß bei 40 °C unter Vakuum vergossen wird.

**Claims**

1. Use of casting resin moulding compositions, made of epoxy resins hardenable with a cycloaliphatic diamine or a tertiary amine and based on bisphenol A and having an epoxide value of 0.50 to 0.58, for the production of ink mosaic recordings heads.

2. Use according to claim 1, characterised in that epoxy resins and cycloaliphatic diamine are included in the ratio by weight of 100 : 25.

3. Use according to claim 1, characterised in that epoxy resin and tertiary amine are included in the ratio by weight of 100 : 3.

4. Use according to claims 1 and 2, characterised in that isophorone diamine is included as a cycloaliphatic diamine.

5. Use according to claims 1 and 3, characterised in that 2,4,6-tris-dimethyl aminomethyl phenol (DMP-30) is included as a tertiary amine.

6. Use according to claims 1 and 3, characterised in that N,N'-dimethyl aminodiphenyl methane (T-base) is included as a tertiary amine.

7. Use according to claims 1 to 6, characterised in that the casting resin moulding compositions also include 0.1 to 2 parts by weight of an epoxy silane.

8. Method for producing ink mosaic recording heads using hardenable casting resin moulding compositions according to claims 1, 2, 4 and 7, characterised in that a mixture of 100 parts by weight of an epoxy resin based on bisphenol A and having an epoxide value of 0.50 to 0.58, and 25 parts by weight of isophorone diamine and, optionally, 0.1 to 2 parts by weight of an epoxy silane, is cast in vacuo, removed from the mould, and, as the case may be, the moulding obtained is tempered.

9. Method for producing ink mosaic recording heads using casting resin moulding compositions according to claims 1, 3, 5, 6 and 7, characterised in that 100 parts by weight of an epoxy resin based on bisphenol A and having an epoxide value of 0.50 to 0.58 and 1 to 3 parts by weight of a tertiary amine and, optionally, 1 part by weight of an epoxy silane, is cast in vacuo, removed from the mould, and, as the case may be, the moulding obtained is tempered.

10. Method according to claims 8 and 9, characterised in that casting is carried out at 40 °C in vacuo.

## Revendications

1. Utilisation de masses de résine à couler, en résines époxydiques, à base de bisphénol A et ayant un indice d'époxyde de 0,50 à 0,58 durcissables par une diamine cycloaliphatique ou par une amine tertiaire, pour la fabrication de têtes imprimantes par points à jets d'encre.

2. Utilisation suivant la revendication 1, caractérisée en ce que la résine époxydique et la diamine cycloaliphatique sont présentes en le rapport pondéral 100 : 25.

3. Utilisation suivant la revendication 1, caractérisée en ce que la résine époxydique et l'amine tertiaire sont présentes en le rapport pondéral 100 : 3.

4. Utilisation suivant la revendication 1 et 2, caractérisée en ce que la diamine cycloaliphatique comprend de l'isophoronediamine.

5. Utilisation suivant la revendication 1 et 3, caractérisée en ce que l'amine tertiaire comprend du 2,4,6-tris-diméthylaminométhylphénol (DMP-30).

6. Utilisation suivant la revendication 1 et 3, caractérisée en ce que l'amine tertiaire comprend du N,N'-diméthylaminodiphénylméthane (base-T).

7. Utilisation suivant les revendications 1 à 6, caractérisée en ce que les masses de résine à couler contiennent, en outre, de 0,1 à 2 parties en poids d'un époxysilane.

8. Procédé de fabrication de têtes d'impression par points à jets d'encre, en utilisant des masses de résines à couler durcissables suivant les revendications 1, 2, 4 et 7 caractérisé en ce qu'il consiste à couler sous vide un mélange de 100 parties en poids d'une résine époxydique à base de bisphénol A et ayant un indice d'époxyde de 0,50 à 0,58 et 25 parties en poids d'isophorone-diamine et, le cas échéant, de 0,1 à 2 parties en poids d'un époxysilane, à le démouler et, le cas échéant, à lui faire subir un passage à l'étuve.

9. Procédé de fabrication de têtes d'impression par points par jets d'encre en utilisant des masses de résine à couler suivant les revendications 1, 3, 5, 6 et 7, caractérisé en ce qu'il consiste à couler sous vide 100 parties en poids d'une résine époxydique à base de bisphénol A et ayant un indice d'époxyde de 0,50 à 0,58 et de 1 à 3 parties en poids d'une amine tertiaire et, le cas échéant, une partie en poids d'un époxysilane, à le démouler et à lui faire subir un passage à l'étuve.

10. Procédé suivant la revendication 8 et 9, caractérisé en ce qu'il consiste à couler sous vide à 40 °C.